# DEMANDE DE BREVET EUROPEEN

(11) **EP 1 814 294 A2**
(43) Date de publication de la demande: **01.08.2007**
(21) Numéro de dépôt: 07101314.8
(22) Date de dépôt: 29.01.2007
(51) Int. Cl.: H04M 3/533, H04M 3/53, H04M 3/42

(54) **Procédé et système d'envoi de contenus multimédias**

(30) Priorité: 27.01.2006 FR 0650300
(71) Demandeur: FRANCE TELECOM, 75015 Paris (FR)
(72) Inventeur: Jouault, Pascal, 22300 Lannion (FR); Brun, Arnaud, 92100 Boulogne Billancourt (FR)
(74) Mandataire: Desormiere, Pierre-Louis

(57) **Abrégé**

L'invention se rapporte à un procédé d'envoi de contenus multimédias comprenant une étape de création d'un contenu multimédia (31) à partir d'un terminal (2), une étape de composition d'un message (3) comprenant ledit contenu multimédia (31), et une étape d'envoi du message (3) à un centre (4) via un identifiant d'une messagerie multimédia (5). Le procédé comprend en outre une étape de transmission du message (3) par le centre (4) à la messagerie multimédia (5), et une étape de traitement du contenu multimédia (31) dudit message (3) par une unité de traitement (51) de la messagerie multimédia (5) réalisée en fonction de l'identifiant indiqué dans le message (3).

## Description

### Domaine de l'invention

La présente invention se rapporte au domaine des télécommunications et, plus particulièrement, à celui des messages électroniques multimédias dont le contenu peut être des images, photos, vidéo, avatars, animations, etc.

### Art antérieur

Il existe actuellement des messageries multimédias qui sont des services qui permettent à un utilisateur de recevoir des messages avec des éléments audio et/ou vidéo de la part de ses correspondants, puis de consulter ces messages.

L'annonce d'accueil de la messagerie multimédia d'un utilisateur est le message audio et/ou vidéo qu'entend et/ou visualise tout correspondant qui appelle l'utilisateur lorsque celui-ci n'est pas joignable (i.e. si son terminal mobile est éteint ou hors couverture réseau, si sa ligne fixe est occupée ou renvoyée de manière inconditionnelle sur la messagerie multimédia, si l'utilisateur refuse de prendre l'appel (non réponse), etc.).

Le système de messagerie multimédia permet généralement à l'utilisateur de personnaliser son annonce d'accueil en lui offrant la possibilité de l'enregistrer lui-même. Cette personnalisation de l'annonce peut se faire :
- depuis un téléphone mobile ou fixe, en appelant le système de messagerie multimédia : l'utilisateur enregistre alors son annonce d'accueil,
- depuis un ordinateur par un accès Web (si cette fonctionnalité est fournie par l'opérateur) : l'utilisateur enregistre son annonce d'accueil à l'aide d'un micro et d'une caméra (Webcam) raccordés à son ordinateur.

Une dédicace multimédia est un message multimédia qui est déposé dans la messagerie multimédia d'un ou plusieurs correspondants.

Le dépôt de messages "indirects" permet aujourd'hui à l'utilisateur d'enregistrer un message vidéo depuis un terminal compatible et de le déposer dans la messagerie multimédia de son correspondant. Pour se faire, l'utilisateur doit appeler le système de messagerie multimédia de son correspondant.

Ainsi, ce service de dépôt de message indirect n'offre à l'utilisateur que la possibilité d'envoyer un message multimédia directement enregistré avec son terminal. En outre, dans le cadre de messages MMS, par exemple, le destinataire du message doit posséder un terminal compatible MMS et être abonné à une messagerie supportant le service de messagerie MMS pour pouvoir recevoir et lire le message vidéo. Aussi, l'utilisateur ne peut envoyer une dédicace multimédia qu'aux correspondants qui possèdent un terminal et une messagerie compatibles.

Les systèmes de messageries multimédias actuels permettent à l'utilisateur de personnaliser son annonce d'accueil en lui offrant uniquement la possibilité d'enregistrer sa propre voix ou sa propre image. Ils ne permettent pas, par exemple, d'ajouter une signature sonore ou vidéo en début ou en fin d'annonce pour constituer ainsi une annonce réellement personnalisée. En outre, la personnalisation de l'annonce d'accueil s'effectue en étant connecté à la messagerie, ce qui ne permet pas à l'utilisateur de préparer son annonce avant la connexion et, par conséquent, de disposer de temps et de toutes les fonctionnalités offertes pour la personnalisation de son annonce.

De même, le dépôt de messages "indirects" sur la messagerie multimédia ne permet pas de déposer des messages réellement personnalisés (l'utilisateur peut uniquement enregistrer une vidéo). Il ne permet pas, par exemple, d'ajouter une signature vidéo à la fin de son message.

Or, les terminaux vidéo offrent des fonctionnalités de plus en plus riches pour la composition de messages multimédias et en particulier en ce qui concerne les éléments vidéo de ces messages (par exemple, des fonctions permettant de créer son propre avatar à partir d'éléments prédéfinis (tête, buste, etc.) sont déjà disponibles sur certains terminaux). Parmi ces fonctions, on trouve notamment :
- l'enregistrement de la voix ou de vidéo de l'utilisateur ou un son quelconque,
- la composition d'un morceau de musique,
- l'utilisation d'éléments multimédias (audio, vidéo, fond d'écran, etc.) disponibles sur son terminal (éléments présents par défaut dans le terminal ou reçus par MMS, éléments téléchargés, etc....)
- le mixage de différents éléments multimédias (audio, vidéo, image, animations, etc.),
- l'ajout d'effets (échos, distorsions, fondus, etc.), de fonds sonores/d'écrans ou de signatures sonores/vidéo,
- etc.

Le document WO 2005/015887 décrit un service de modification de l'accueil d'une messagerie vocale et le service d'envoi de dédicaces vocales par messages MMS. Cependant, le service décrit ne concerne que le cas où le message MMS contient uniquement un élément vocal, à l'exclusion de tout autre contenu (images, photos, avatars, vidéo, animations, ...).

### Objet et description succincte de l'invention

La présente invention a pour objet de pallier ces inconvénients en proposant une solution permettant à un utilisateur de créer sur son terminal un contenu multimédia personnalisé avec au moins un élément vidéo, et ce indépendamment de toute connexion à une messagerie multimédia, et d'utiliser ce contenu pour personnaliser son annonce d'accueil de messagerie ou envoyer des dédicaces multimédias à d'autres utilisateurs.

Ce but est atteint grâce à un procédé d'envoi de contenus multimédias comprenant:
une étape de création d'un contenu multimédia à partir d'un terminal,
une étape de composition d'un message comprenant ledit contenu multimédia, et
une étape d'envoi du message à un centre via un identifiant d'une messagerie multimédia,
caractérisé en ce qu'il comprend en outre:
une étape de transmission dudit message par le centre à la messagerie multimédia, et
une étape de traitement du contenu multimédia dudit message par une unité de traitement de la messagerie multimédia réalisée en fonction de l'identifiant indiqué dans le message.

Ainsi, grâce au procédé de l'invention, l'utilisateur peut créer un contenu multimédia avec au moins un élément visuel (images, photos, vidéo, avatars, animations, etc.) en utilisant toutes les fonctionnalités de personnalisation qui sont à sa disposition. Le contenu ainsi créé est ensuite transmis par message à une messagerie multimédia qui réalise le traitement du contenu multimédia désiré par l'utilisateur. Pour choisir le service et le traitement associés au contenu multimédia créé par l'utilisateur, ce dernier doit simplement envoyer le message avec un identifiant correspondant au service désiré. L'identifiant de la messagerie multimédia peut être un numéro court, un numéro spécial (ex. numéro d'appel taxé ou à tarif réduit), ou encore une adresse email.

Selon un aspect de l'invention, l'envoi peut se faire vers un service de personnalisation d'annonce d'accueil de messagerie via un premier identifiant (numéro ou une adresse email spécifique). Dans ce cas, dans l'étape de traitement, l'unité de traitement réagit à ce premier identifiant en remplaçant l'annonce d'accueil de la messagerie de l'utilisateur par le contenu multimédia du message. Dans l'étape de traitement, l'unité de traitement extrait le contenu multimédia du message et identifie la messagerie de l'utilisateur pour laquelle l'annonce d'accueil doit être mise à jour à partir du numéro de l'émetteur présent dans le message.

Selon un autre aspect de l'invention, un service associé à un deuxième identifiant (numéro ou à l'adresse email) peut correspondre à un service d'envoi de dédicaces multimédias. Dans ce cas, dans l'étape de traitement, l'unité de traitement réagit à ce deuxième identifiant en déposant le contenu multimédia du message dans la ou les messageries multimédias respectivement d'un ou plusieurs utilisateurs. Dans l'étape de composition du message, un élément de texte contenant un ou plusieurs identifiants de messagerie multimédia est ajouté et, dans l'étape de traitement, l'unité de traitement extrait le contenu multimédia du message ainsi que le ou les identifiants présents dans l'élément de texte pour identifier chaque messagerie multimédia dans laquelle ledit contenu multimédia doit être déposé. De cette manière, un utilisateur possédant un terminal non compatible (par exemple non compatible avec les messages MMS) peut quand même recevoir la dédicace multimédia.

L'identifiant de messagerie (numéro ou adresse email) utilisé pour envoyer le message permet à la fois d'acheminer le message jusqu'à la messagerie multimédia et de choisir le services (personnalisation d'annonce d'accueil ou d'envoi de dédicaces multimédias) à réaliser avec le contenu multimédia inclus dans le message.

Selon un aspect de l'invention, le message est un message multimédia MMS et le centre est un centre MMSC.

La présente invention concerne également un système d'envoi de contenus multimédias comprenant au moins un terminal apte à créer un contenu multimédia et à composer un message comprenant ledit contenu multimédia. Le message est envoyé à un centre via un identifiant de messagerie multimédia qui peut être un numéro court, un numéro de téléphone spécial (ex. numéro d'appel taxé ou à tarif réduit), ou encore une adresse email. La messagerie multimédia recevant le message transmis par le centre comprend une unité de traitement pour traiter le contenu multimédia du message en fonction de l'identifiant indiqué dans le message.

Comme pour le procédé décrit précédemment, le système de l'invention apporte une solution qui permet à un utilisateur de créer un contenu multimédia personnalisé et de le transmettre à une messagerie multimédia via un message qui se charge de traiter ce contenu en fonction de services que l'utilisateur sélectionne en utilisant un identifiant (numéro ou une adresse email) déterminé lors de l'envoi du message.

Selon un aspect de l'invention, l'unité de traitement de la messagerie multimédia comprend des moyens aptes à réagir à un premier identifiant (numéro ou une adresse email) correspondant à un service de personnalisation d'annonce d'accueil de messagerie pour remplacer l'annonce d'accueil de la messagerie de l'utilisateur par le contenu multimédia du message. L'unité de traitement de la messagerie multimédia comprend des moyens pour extraire le contenu multimédia du message et pour identifier la messagerie de l'utilisateur pour laquelle l'annonce d'accueil doit être mise à jour à partir du numéro de l'émetteur présent dans le message.

Selon un autre aspect de l'invention, l'unité de traitement de la messagerie multimédia comprend des moyens aptes à réagir à un deuxième identifiant (numéro ou une adresse email) correspondant à un service d'envoi de dédicaces multimédias pour déposer le contenu multimédia du message dans la ou les messageries multimédias respectivement d'un ou plusieurs utilisateurs. L'unité de traitement de la messagerie multimédia comprend des moyens pour extraire le contenu multimédia du message ainsi que le ou les identifiants présents dans un élément de texte du message pour identifier chaque messagerie multimédia dans laquelle ledit contenu multimédia doit être déposé.

Selon un aspect de l'invention, le message est un message multimédia MMS et le centre est un centre MMSC.

L'invention a encore pour objet un programme d'ordinateur comprenant des instructions de code de programme pour l'exécution d'au moins l'une des étapes du procédé d'envoi de contenus multimédias décrit lorsque ledit programme est exécuté sur un ordinateur

Plus précisément, le programme d'ordinateur, destiné à être exécuté sur une unité de traitement d'une messagerie multimédia, comprend des instructions pour traiter le contenu multimédia d'un message en fonction de l'identifiant (numéro ou adresse email) indiqué dans le message.

L'identifiant peut correspondre à un premier identifiant d'un service de personnalisation d'annonce d'accueil de messagerie. Dans ce cas, le programme comprend des instructions pour réagir à ce premier identifiant et pour remplacer l'annonce d'accueil de la messagerie de l'utilisateur par le contenu multimédia du message. Le programme comprend des instructions pour extraire le contenu multimédia du message et pour identifier la messagerie d'un utilisateur pour laquelle l'annonce d'accueil doit être mise à jour à partir d'un numéro d'émetteur présent dans le message.

L'identifiant (numéro ou adresse email) peut aussi correspondre à un deuxième identifiant d'un service d'envoi de dédicaces multimédias, le programme comprenant des instructions pour réagir à ce deuxième identifiant et pour déposer le contenu multimédia du message dans la ou les messageries multimédias respectivement d'un ou plusieurs utilisateurs. Le programme comprend des instructions pour extraire le contenu multimédia du message ainsi que le ou les identifiants présents dans un élément de texte du message et pour identifier chaque messagerie multimédia dans laquelle le contenu multimédia doit être déposé.

Le message peut être un message multimédia MMS.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'une architecture dans laquelle est mise en oeuvre le service de personnalisation d'annonce d'accueil conformément à l'invention,
- la figure 2 est une vue schématique d'une architecture dans laquelle est mise en oeuvre le service d'envoi de dédicaces multimédias conformément à l'invention,
- la figure 3 est un ordinogramme montrant les étapes mises en oeuvre par une unité de traitement de messagerie multimédia conformément à un mode de réalisation de l'invention.

### Description détaillée des modes de réalisation de l'invention

La présente invention propose une solution pour permettre à un utilisateur d'un terminal mobile (téléphone mobile, PDA communicant, etc.) ou fixe (téléphone fixe, ordinateur, etc.) de créer un contenu multimédia personnalisé avec un ou plusieurs éléments multimédias à partir de son terminal et d'envoyer ce contenu à une messagerie multimédia de l'utilisateur soit pour modifier l'annonce d'accueil de cette messagerie avec ce contenu, soit pour transmettre ce contenu vers d'autres messageries multimédias d'autres utilisateurs.

A cet effet et comme expliqué plus loin en détail, l'invention peut utiliser le service bien connu dit service MMS ("Multimedia Messaging Service") qui est un service qui permet aux abonnés de réseaux de téléphonie mobiles ou fixes d'envoyer et de recevoir des messages multimédias (messages dont le contenu peut être du texte, des images, du son, des vidéo, des animations, ...).

De façon connue, un service MMS comprend un environnement MMS qui permet l'échange de messages MMS entre les terminaux des utilisateurs de ce service qui sont reliés à un réseau de télécommunication qui peut être un réseau mobile (par exemple réseau GSM, GPRS, UMTS,...), un réseau local sans fil (par exemple WLAN, WiMAX,...), un réseau fixe filaire ou non (avec informations passées dans la bande), ou encore un réseau de fibres optiques.

L'environnement MMS (désigné généralement sous le terme MMSE pour "MMS Environnement") comprend un centre MMS (encore appelé MMSC pour "MMS-Center") qui gère le routage des messages MMS aussi bien dans l'environnement MMS auquel il appartient que vers d'autres environnements MMSE ou d'autres serveurs de messagerie. De façon connue, le centre MMSC est essentiellement constitué d'un ou plusieurs serveurs comprenant des modules (logiciels) permettant le traitement des messages MMS (ex. routage, stockage, adaptation).

Le centre MMSC est en outre en liaison avec des services à valeur ajoutée ("VAS Applications"), une base de données pour la gestion des abonnés et de leur localisation (par exemple : HLR pour "Home Location Register" pour le réseau mobile), des systèmes de facturation, et des bases de données d'informations sur les utilisateurs MMS (ex. informations de présence).

Ces éléments réseau sous le contrôle d'un fournisseur de service de messagerie multimédia ("MMS content provider") permettent l'accès aux services MMS à des utilisateurs abonnés via un réseau de télécommunication.

Les différentes entités d'un système d'échange de messages MMS communiquent à travers un ensemble d'interfaces dédiées, à savoir:
- L'interface MM1 qui permet l'échange entre un client MMS embarqué sur un terminal et un centre MMSC;
- L'interface MM2 est l'interface utilisée entre les entités de routage (MMS relay) et de stockage (MMS server) du centre MMSC. La plupart des solutions des fournisseurs intègrent les deux entités dans le même équipement rendant cette interface propriétaire (i.e. non normalisée);
- L'interface MM3 permet à un centre MMSC d'échanger des messages avec d'autres serveurs de messagerie;
- L'interface MM4 permet l'échange de messages MMS entre deux centres MMSC appartenant à deux environnements MMSE différents;
- L'interface MM5 permet au centre MMSC d'interroger la base de données de gestion des abonnés;
- L'interface MM6 permet au centre MMSC d'accéder à la base de données d'informations sur les usagers MMS;
- L'interface MM7 permet le transfert de messages MMS d'un centre MMSC vers des services à valeur ajoutée et inversement;
- L'interface MM8 permet au centre MMSC d'interagir avec les systèmes de facturation.

Concernant les terminaux mobiles ou fixe aptes à envoyer des messages MMS à travers l'environnement MMSE, ceux-ci doivent être équipés d'un client MMS embarqué dans le terminal. Le client MMS (encore appelé MMS-UA pour "MMS User Agent") est un logiciel d'application utilisateur embarqué sur le terminal qui permet la composition, la présentation, l'envoi et la réception des messages MMS.

L'architecture du service MMS est bien connue en soi et ne sera pas décrit plus en détail pour ne pas alourdir inutilement la présente description. On pourra toutefois se reporter notamment aux recommandations publiées par l'organisme de standardisation pour les systèmes mobiles de troisième génération 3GPP (www.3gpp.org).

Le service MMS est utilisé dans la présente invention comme moyen de transmission des contenus multimédias créés par l'utilisateur à partir de son terminal. Toutefois, contrairement au fonctionnement habituel du service MMS, les messages multimédias de l'invention ne sont pas délivrés directement à d'autres utilisateurs par le centre MMSC mais sont transmis par ce dernier à une messagerie multimédia qui comprend des moyens pour traiter ces messages comme décrit plus loin en détail.

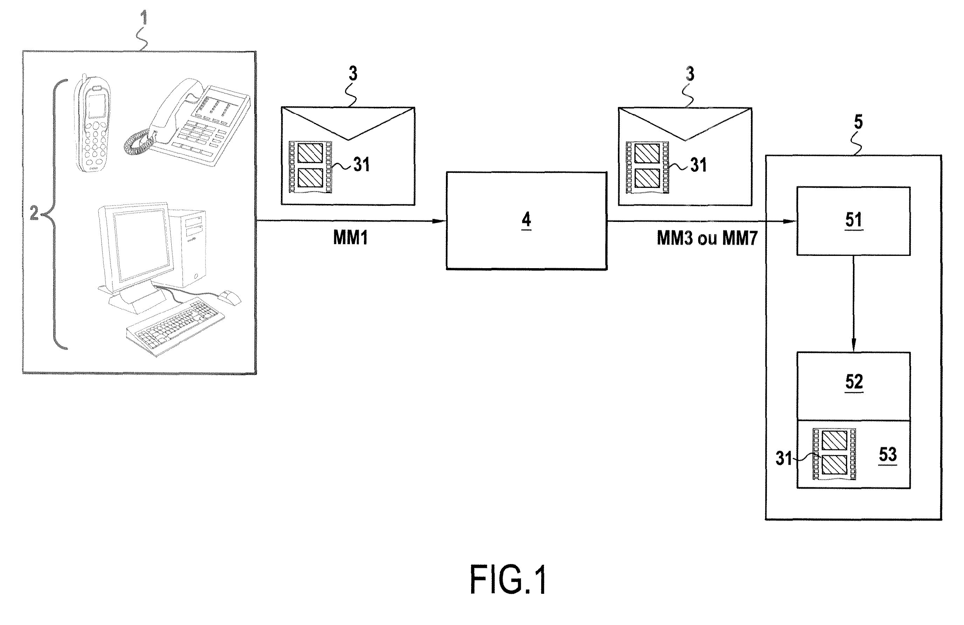

On décrit en relation avec la figure 1 un mode de mise en oeuvre de la présente invention qui permet à un utilisateur de personnaliser l'annonce d'accueil de sa messagerie multimédia en créant un contenu multimédia et en l'envoyant dans un message multimédia depuis son terminal vers sa messagerie multimédia qui, lorsqu'elle reçoit ce message, modifie l'annonce d'accueil (en remplaçant son ancienne annonce par le contenu multimédia présent dans le message reçu).

Plus précisément, un utilisateur 1 crée sur son terminal 2 (par exemple: téléphone mobile, PDA communicant, téléphonie fixe, ordinateur, etc.) un contenu multimédia 31 comprenant au moins un élément multimédia et correspondant à la nouvelle annonce. A cet effet, selon les fonctionnalités disponibles sur son terminal, il peut utiliser ou créer un ou plusieurs éléments multimédias à partir d'images, photos, séquences vidéo, avatars, animations, etc. En outre de ce ou ces éléments multimédias, l'utilisateur peut par exemple :
- enregistrer sa voix, un son quelconque,
- composer un morceau de musique,
- utiliser des éléments multimédias disponibles sur son terminal (éléments présents par défaut dans le terminal ou reçus par MMS, éléments téléchargés, etc.)
- mixer différents éléments multimédias (par exemple diaporama de photos avec une annonce vocale),
- ajouter des effets (échos, distorsions, fondus, etc.) ou des fonds sonores,
- etc....

Une fois le contenu multimédia 31 créé, l'utilisateur insère ce contenu dans un message multimédia MMS 3 et envoie le message multimédia MMS 3 vers un identifiant N1 d'une messagerie multimédia 5 qui peut être un numéro (court ou autre type de numéro de téléphonie) ou une adresse email et qui correspond à un numéro ou une adresse email défini par l'opérateur qui souhaite mettre en oeuvre le service de personnalisation d'annonce d'accueil. Ce message transite par un centre MMSC 4 qui le transmet à la messagerie multimédia 5 à laquelle l'utilisateur 1 est abonné.

Dans la messagerie multimédia 5, une unité de traitement 51 récupère le contenu multimédia 31 du message multimédia MMS 3 ainsi que le numéro de téléphone de l'émetteur du message, c'est-à-dire de l'utilisateur 1, puis remplace l'annonce d'accueil 53 de la messagerie 52 de l'émetteur par le contenu 31.

De façon connue, un message multimédia MMS comporte un entête (MMS-H) et un corps (MMS-B). L'en-tête MMS-H du message multimédia MMS contient des informations relatives au transport du message, telles que, par exemple, l'identification du destinataire (i.e. le numéro ou l'adresse email N), de l'émetteur et des informations relatives au message envoyé (date d'envoi, date de validité du message, objet du message, etc.). L'unité de traitement 51 extrait le numéro de l'émetteur dans l'en-tête du message multimédia MMS et le contenu multimédia 31 dans le corps du message.

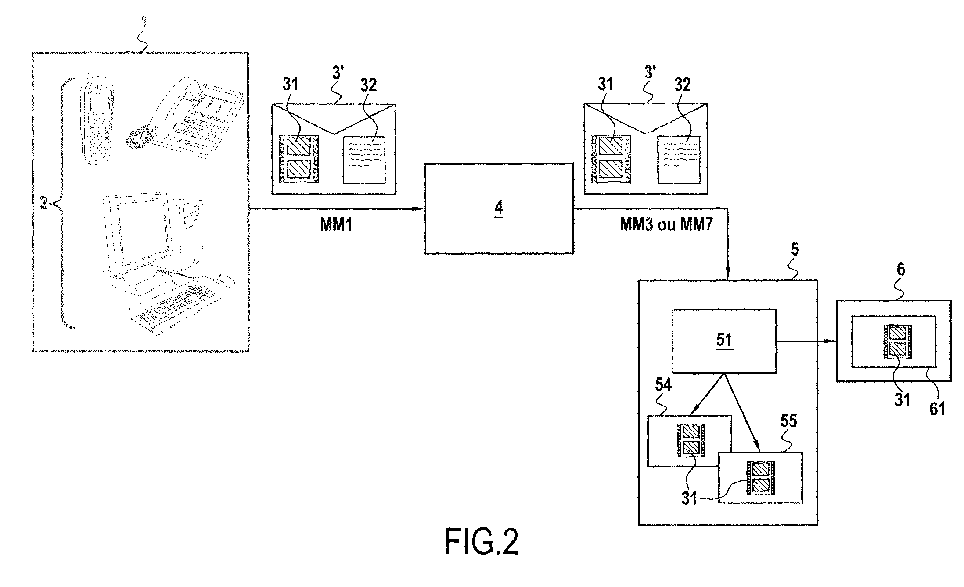

On décrit maintenant en relation avec la figure 2 une autre mise en oeuvre de l'invention qui permet à un utilisateur d'envoyer des dédicaces multimédias, c'est-à-dire des messages comprenant un contenu multimédia personnalisé avec un ou plusieurs éléments multimédias, vers la ou les messageries multimédias d'un ou plusieurs utilisateurs.

De même que précédemment, l'utilisateur 1 crée sur son terminal 2 (téléphone mobile, PDA communicant, téléphonie fixe ou ordinateur) un contenu multimédia 31 comprenant au moins un élément multimédia et correspondant à la dédicace qu'il souhaite envoyer. A cet effet, selon les fonctionnalités disponibles sur son terminal, il peut utiliser ou créer un ou plusieurs éléments multimédias à partir d'images, photos, séquences vidéo, avatars, animations, etc. En outre de ce ou ces éléments multimédias, l'utilisateur peut par exemple :
- enregistrer sa voix, un son quelconque,
- composer un morceau de musique,
- utiliser des éléments multimédias disponibles sur son terminal (éléments présents par défaut dans le terminal ou reçus par MMS, éléments téléchargés, etc.)
- mixer différents éléments multimédias (ex. diaporama de photos avec une annonce vocale),
- ajouter des effets (échos, distorsions, fondus, etc.) ou des fonds sonores,
- etc....

L'utilisateur ajoute ensuite les coordonnées du ou des destinataires soit dans l'objet du message MMS, soit dans un élément de texte 32 du message MMS lui-même (avec par exemple le caractère « ; » comme séparateur des différents destinataires). Les coordonnées du ou des utilisateurs peuvent être soit un numéro de téléphone mobile ou fixe, soit une adresse email.

Des exemples d'éléments de texte du message MMS ainsi envoyé peuvent être par exemple:
- « 0600000000 » : dans ce cas, la dédicace multimédia sera déposée dans la messagerie multimédia du numéro 0600000000,
- « 0600000000 ; 0600000001 ;» : dans ce cas, la dédicace multimédia sera déposée dans les messageries multimédia des numéros 0600000000 et 0600000001,
- « XXX@XX.com » : dans ce cas, la dédicace multimédia sera déposée dans la messagerie multimédia de l'adresse email XXX@XX.com.

Une fois le contenu multimédia 31 créé, l'utilisateur insère ce contenu dans un message multimédia MMS 3' et envoie le message multimédia MMS 3' vers un identifiant N2 (numéro ou adresse email) de la messagerie multimédia 5 qui correspond à un identifiant défini par l'opérateur qui souhaite mettre en oeuvre le service d'envoi de dédicaces multimédias. Ce message transite par le centre MMSC 4 qui le transmet à la messagerie multimédia 5 à laquelle l'utilisateur 1 est abonné.

Dans la messagerie multimédia, l'unité de traitement 51 récupère le contenu multimédia 31 et les coordonnées du ou des destinataires contenus dans le corps (MMS-B) du message MMS 3' reçu, puis dépose ce contenu multimédia dans la ou les messageries multimédias du ou des correspondants. Dans l'exemple de la figure 2, le contenu multimédia 31 est respectivement déposé dans les messageries multimédias 54, 55 (messageries multimédias hébergées le serveur de la messagerie multimédia 5) et 61 (messagerie multimédia hébergée sur un autre serveur de messagerie multimédia 6) correspondant aux messageries multimédias de trois correspondants différents et dont le numéro de téléphone ou l'adresse email est indiqué dans le message multimédia MMS 3'. Les messageries multimédias des correspondants peuvent être des messageries compatible MMS ou non.

Que ce soit pour la personnalisation de l'annonce d'accueil de la messagerie de l'utilisateur ou l'envoi de dédicaces multimédias, l'invention met en oeuvre une messagerie multimédia 5 qui comprend une unité de traitement 51 spécifiquement programmée pour réaliser ces services et apte à recevoir des messages multimédia MMS provenant d'un centre MMSC. Cette unité de traitement est réalisée essentiellement par des moyens logiciels (ajouts de patchs) qui sont exécutés par le serveur de la messagerie multimédia.

La messagerie multimédia 5 est un centre/serveur qui héberge les messageries multimédias des abonnées, la messagerie de chaque utilisateur et, par conséquent, l'annonce d'accueil associée, étant identifiable par le numéro d'émetteur de l'utilisateur (par exemple avec table de correspondance).

Pour le traitement des contenus multimédias comprenant des éléments vidéo en outre d'éléments sonores, l'unité de traitement 51 doit comprendre des moyens de transcodage nécessaires pour assurer une lisibilité du contenu multimédia envoyé avec le message multimédia MMS. En fonction du type de fichier et du réseau utilisé par l'utilisateur, l'unité de traitement met en oeuvre des algorithmes de codage/décodage, encore appelés "codecs", pour adapter le contenu multimédia au format utilisé pour l'annonce d'accueil. De même, en fonction des réseaux et des terminaux des destinataires des dédicaces multimédias, l'unité de traitement utilisera les codecs nécessaires pour permettre la lecture du contenu multimédia par les destinataires. En outre, le traitement du contenu multimédia du message multimédia MMS nécessite un double traitement, à savoir un traitement pour la voix ou les données de son avec les codecs associées et un autre traitement pour les éléments visuels (images, photos, vidéo, avatars, animations, etc.). A la suite de ces deux traitements effectués en parallèle, un traitement supplémentaire de synchronisation de la voix ou du son avec le ou les éléments visuels est également nécessaire.

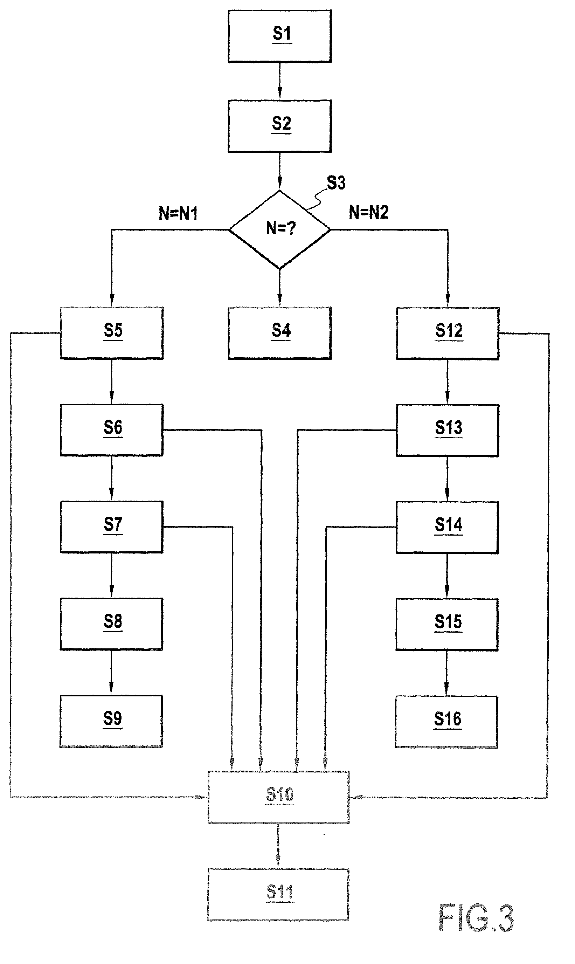

La figure 3 décrit en détail les étapes réalisées par l'unité de traitement pour assurer les deux services (i.e. personnalisation de l'annonce d'accueil de la messagerie de l'utilisateur et envoi de dédicaces multimédias).

Les opérations exécutées par l'unité de traitement débutent à la réception d'un message multimédia MMS provenant du centre MMSC (étape S1). A la réception de ce message, l'unité de traitement extrait l'identifiant (numéro ou adresse email) N utilisé pour envoyer le message multimédia MMS (étape S2). L'unité de traitement analyse cet identifiant pour déterminer s'il correspond à l'identifiant (numéro ou adresse email) N1 permettant de déclencher le service de mise à jour de l'annonce d'accueil ou à l'identifiant (numéro ou adresse email) N2 permettant de déclencher le service d'envoi de dédicaces multimédias (étape S3). Si l'identifiant N ne correspond à aucun des deux identifiants N1 et N2, il est mis fin au traitement du message multimédia MMS par l'unité de traitement (étape S4).

Si l'identifiant correspond à l'identifiant N1 (numéro ou adresse email du service de personnalisation de l'annonce d'accueil), l'unité de traitement extrait le contenu multimédia dans le message multimédia MMS (étape S5). L'unité de traitement extrait ensuite le numéro de l'émetteur du message pour identifier la messagerie multimédia qui appartient à celui-ci (étape S6). Si le numéro de l'émetteur ne peut être extrait car l'utilisateur a activé par exemple le service d'appel en mode secret (numéro masqué), il est mis fin au traitement (étape S11) avec éventuellement l'envoi d'un message d'erreur à l'émetteur (étape S10). Autrement, l'unité de traitement met à jour l'annonce d'accueil de la messagerie de l'émetteur identifiée à l'aide de son numéro en remplaçant l'annonce courante avec le contenu multimédia extrait du message (étape S7). Si aucune messagerie multimédia n'a pu être identifiée à partir du numéro de l'émetteur, il est mis fin au traitement (étape S11) avec éventuellement l'envoi d'un message d'erreur à l'émetteur (étape S10). Lorsque la mise à jour de l'annonce d'accueil a pu être réalisée, l'unité de traitement envoie un message (par exemple un message SMS) à l'émetteur pour l'informer que l'annonce d'accueil a été mise à jour avec succès (étape S8). Il est alors mis fin au traitement pour réaliser le service de personnalisation de l'annonce d'accueil (étape S9).

Si l'identifiant correspond à l'identifiant N2 (numéro ou adresse email du service d'envoi de dédicaces multimédias), l'unité de traitement extrait le contenu multimédia dans le message multimédia MMS (étape S12). L'unité de traitement extrait ensuite le ou les numéros des destinataires de la dédicace multimédia présents dans l'élément de texte du message multimédia MMS (étape S13). Si aucun élément de texte n'est présent dans le message ou si aucun des numéros indiqués dans cet élément n'est valide, il est mis fin au traitement (étape S11) avec éventuellement l'envoi d'un message d'erreur à l'émetteur (étape S10). Autrement, l'unité de traitement dépose le contenu multimédia extrait du message dans la ou les messageries multimédias du ou des destinataires de la dédicace (étape S14). Si aucune messagerie multimédia n'a pu être identifiée à partir des coordonnées des destinataires, il est mis fin au traitement (étape S11) avec éventuellement l'envoi d'un message d'erreur à l'émetteur (étape S10). Lorsque le dépôt du contenu multimédia a pu être réalisé, l'unité de traitement envoie un message (par exemple un message SMS) à l'émetteur pour l'informer que la dédicace multimédia a été transmise avec succès (étape S15). Il est alors mis fin au traitement pour réaliser le service d'envoi de dédicaces multimédia (étape S16).

Selon le système de messagerie multimédia utilisé par l'opérateur et selon l'architecture retenue, une interface SMTP (Simple Mail Transfer Protocol) ou SOAP (Simple Object Access Protocol) peut être utilisée dans la présente invention.

Entre le centre MMSC 4 et la messagerie multimédia 5 (figures 1 et 2), selon l'architecture retenue, par exemple, les interfaces MM3 ou MM7 peuvent être utilisées. L'interface MM3 est l'interface entre le centre MMSC et les systèmes de messagerie externes. Elle n'est pas standardisée mais des exemples d'implémentation (utilisant le protocole SMTP) sont indiqués en annexe dans la norme MMS 3GPP TS 23.140 ((annexe A): "Annex A (informative): Examples of MMS architectural implementations"). L'interface MM7 est l'interface entre le centre MMSC et les fournisseurs de Services à Valeurs Ajoutés. Cette interface est normalisée (protocole SOAP version 1.1 sur http, Note W3C du 8 mai 2000 "Simple Object Access Protocol (SOAP) 1.1").

Ainsi, le raccordement du centre MMSC et de la messagerie multimédia est réalisé en utilisant l'une de ces deux interfaces MM3 (basée sur le protocole SMTP) ou MM7 (basée sur le protocole SOAP) :

Les interfaces de communication ainsi mises en oeuvre dans l'invention (interfaces MM1, MM3 et/ou MM7) utilisent des protocoles de communication s'appuyant sur de l'IP actuellement.

Les piles de protocoles de ces trois interfaces sont les suivantes :

| **Interface MM1** | | **Interface MM3** | | **Interface MM7** |
|---|---|---|---|---|
| MMS | | MMS | | MMS |
| WSP/HTTP | | SMTP | | SOAP |
| TCP | | TCP | | http |
| IP | | IP | | TCP |
| | | | | IP |

L'invention a été décrite précédemment en relation avec des messages du type message MMS. Toutefois, la présente invention s'applique plus généralement à tout type de message dans lesquels un contenu multimédia peut être inséré et, notamment, à tout type de message correspondant à une évolution des messages de type MMS.

## Revendications

1. Procédé d'envoi de contenus multimédias comprenant une étape de création d'un contenu multimédia (31) à partir d'un terminal (2),
une étape de composition d'un message (3) comprenant ledit contenu multimédia (31), et
une étape d'envoi du message (3) à un centre (4) via un identifiant (N) d'une messagerie multimédia (5),
**caractérisé en ce qu'**il comprend en outre:
une étape de transmission dudit message (3) par le centre (4) à la messagerie multimédia (5), et
une étape de traitement du contenu multimédia (31) dudit message (3) par une unité de traitement (51) de la messagerie multimédia (5) réalisée en fonction de l'identifiant (N) indiqué dans le message (3).

2. Procédé selon la revendication 1, **caractérisé en ce que** l'identifiant de messagerie multimédia correspond à un premier identifiant (N1) d'un service de personnalisation d'annonce d'accueil de messagerie et **en ce que**, dans l'étape de traitement, l'unité de traitement (51) réagit audit premier identifiant en remplaçant l'annonce d'accueil (53) de la messagerie (52) par le contenu multimédia (31) du message (3).

3. Procédé selon la revendication 2, **caractérisé en ce que**, dans l'étape de traitement, l'unité de traitement (51) extrait le contenu multimédia (31) du message multimédia (3) et identifie la messagerie (52) d'un utilisateur (1) pour laquelle l'annonce d'accueil doit être mise à jour à partir d'un numéro d'émetteur présent dans le message (3).

4. Procédé selon l'une quelconque des revendications 1 à 3, **caractérisé en ce que** l'identifiant de messagerie multimédia correspond à un deuxième identifiant (N2) d'un service d'envoi de dédicaces multimédias et **en ce que**, dans l'étape de traitement, l'unité de traitement (51) réagit audit deuxième identifiant en déposant le contenu multimédia (31) du message (3') dans au moins une messagerie multimédia (54; 55; 61) respectivement d'un ou plusieurs utilisateurs.

5. Procédé selon la revendication 4, **caractérisé en ce que**, dans l'étape de composition du message (3'), un élément de texte (32) est ajouté, ledit élément contenant un ou plusieurs identifiants de messagerie multimédia, et **en ce que** dans l'étape de traitement, l'unité de traitement (51) extrait le contenu multimédia (31) du message (3') ainsi que le ou les identifiants présents dans l'élément de texte (32) pour identifier chaque messagerie multimédia (54, 55, 61) dans laquelle ledit contenu multimédia (31) doit être déposé.

6. Procédé selon l'une quelconque des revendications 1 à 5, **caractérisé en ce que** le message (3) est un message multimédia MMS et **en ce que** le centre (4) est un centre MMSC.

7. Système d'envoi de contenus multimédias comprenant au moins un terminal (2) apte à créer un contenu multimédia (31) et à composer un message (3) comprenant ledit contenu multimédia (31), ledit message (3) étant envoyé à un centre (4) via un identifiant (N) de messagerie multimédia (5), **caractérisé en ce que** la messagerie multimédia (5) recevant le message (3) transmis par le centre (4) comprend une unité de traitement (51) pour traiter le contenu multimédia (31) dudit message (3) en fonction dudit identifiant (N) indiqué dans le message (3).

8. Système selon la revendication 7, **caractérisé en ce que** ledit identifiant correspond à un premier identifiant (N1) d'un service de personnalisation d'annonce d'accueil de messagerie et **en ce que** l'unité de traitement (51) de la messagerie multimédia (5) comprend des moyens aptes à réagir audit premier identifiant pour remplacer l'annonce d'accueil (53) de la messagerie (52) par le contenu multimédia (31) du message (3).

9. Système selon la revendication 8, **caractérisé en ce que** l'unité de traitement (51) de la messagerie multimédia (5) comprend des moyens pour extraire le contenu multimédia (31) du message multimédia (3) et pour identifier la messagerie (52) d'un utilisateur pour laquelle l'annonce d'accueil (53) doit être mise à jour à partir d'un numéro d'émetteur présent dans le message (3).

10. Système selon l'une quelconque des revendications 7 à 9, **caractérisé en ce que** ledit identifiant correspond à un second identifiant (N2) d'un service d'envoi de dédicaces multimédias et **en ce que** l'unité de traitement (51) de la messagerie multimédia (5) comprend des moyens aptes à réagir audit deuxième identifiant pour déposer le contenu multimédia (31) du message (3') dans au moins une messagerie multimédia (54; 55; 61) respectivement d'un ou plusieurs utilisateurs.

11. Système selon la revendication 10, **caractérisé en ce que** l'unité de traitement (51) de la messagerie multimédia (5) comprend des moyens pour extraire le contenu multimédia (31) du message (3') ainsi que le ou les identifiants présents dans un élément de texte (32) du message (3') et pour identifier chaque messagerie multimédia (54, 55, 61) dans laquelle ledit contenu multimédia (31) doit être déposé.

12. Système selon l'une quelconque des revendications 7 à 11, **caractérisé en ce que** le message (3) est un message multimédia MMS et **en ce que** le centre (4) est un centre MMSC.

13. Programme d'ordinateur comprenant des instructions de code de programme pour l'exécution d'au moins l'une des étapes d'un procédé conforme aux revendications 1 à 6 lorsque ledit programme est exécuté sur un ordinateur.
